# EUROPEAN PATENT SPECIFICATION

(11) **EP 3 858 476 B1**
(45) Date of publication and mention of the grant of the patent: **07.10.2026**
(21) Application number: 21159217.5
(22) Date of filing: 11.08.2016
(51) Int. Cl.: B01J 20/04, B01D 53/46, B01D 53/64, B01J 8/00, C02F 1/28

(54) **METHOD OF ADSORBING AN ARSENIC MATERIAL**
VERFAHREN ZUM ADSORBIEREN EINES ARSENMATERIALS
PROCÉDÉ D'ADSORPTION D'UN MATÉRIAU CONTENANT DE L'ARSENIC

(30) Priority: 14.08.2015 US 201562205155 P
(43) Date of publication of application: 04.08.2021
(62) Document number(s) of the earlier application(s) in accordance with Art. 76 EPC: 16837544.2 / 3 334 522
(73) Proprietor: BASF Corporation, Florham Park, NJ 07932 (US)
(72) Inventor: VITYUK, Artem, Plainsboro, New Jersey 08536 (US); MAGLIO, Alfonse, New Jersey 07661 (US); DEUTSCH, Keenan, Somerset, New Jersey 08873 (US); HRATKO, Linda, Colonia, New Jersey 07067 (US)
(74) Representative: BASF IP Association

(56) References cited:
- JP-A- 2004 091 276
- US-A1- 2004 109 821
- DOLLARD L ET AL: "Two-dimensional bismuth + arsenic alloys supported on Pt(111): An electrochemical study", JOURNAL OF ELECTROANALYTICAL CHEMISTRY AND INTERFACIAL ELECTROCHEMISTRY, ELSEVIER, AMSTERDAM, NL, vol. 345, no. 1-2, 15 February 1993 (1993-02-15), pages 205 - 221, XP026607538, ISSN: 0022-0728, [retrieved on 19930215], DOI: 10.1016/0022-0728(93)80480-6

## Description

### FIELD

The present invention relates to a method of adsorbing an arsenic material as defined in the claims.

### BACKGROUND

The removal of impurities from the process and exhaust streams of industrial processes is extremely important to reduce pollutants and toxins emitted into the environment, recover valuable byproducts, maintain the performance of downstream operations and ensure the safety of workers. Such industrial processes include petroleum, petrochemical, polymerization, synthesis gas ("Syngas") and semiconductor processes.

Hydrocarbon process streams, in particular, refinery off gas ("ROG") streams may contain reactive compounds that induce exotherms and/or produce further non-desirable compounds (e.g., acetylide, green oil/cuprene, etc.). Such reactive compounds include acetylene, methyl acetylene and propadiene ("MAPD") as well as hydrogen and carbon monoxide.

Adsorbents containing lead oxide are often used to remove arsine and carbonyl sulfide ("COS") from hydrocarbon streams containing reactive compounds (e.g., acetylene and MAPD) or streams with significant reducing capacity such as hydrogen-containing streams. Lead oxide, however, imposes substantial environmental and health concerns and can affect individual organisms and threaten ecosystems. Therefore, it is of interest to employ alternative materials that would enable safe handling, operation, and disposal of adsorbents. Adsorbents containing copper oxide are also used to remove arsine from hydrocarbon streams. However, copper has a tendency to form acetylides and to promote green oil formation, such that copper oxide adsorbents are primarily employed in "non-reactive" streams containing small concentrations or no acetylene, MAPD, dienes, etc. Moreover, in addition to the environmental health and safety concerns mentioned above, lead oxide-based media are generally characterized by somewhat lower capacity towards arsine as compared to copper-based materials.
US 2004/109821 A1 discloses a manganese/oxygen compound which adsorbs arsenic being a product of burning or heating which comprises an oxygen compound of bismuth and an oxygen compound of manganese.
JP 2004/091276 A discloses a manganese compound and a bismuth compound deposited on activated carbon by mixing the manganese compound and the bismuth compound with 1 to 50 weight ratio of the elements of manganese to bismuth, dissolving the mixture in nitric acid, impregnating activated carbon with the solution, and heat treating at 200°C to 600°C.

Therefore, there is a need for alternative and/or improved adsorbents having a higher adsorption capacity of targeted reactive compounds (e.g., an arsenic material such as arsine or arsenic-containing compounds), no hydrogenation capacity to minimize exotherm risk, and that do not form further non-desirable compounds, such as, acetylide or green oil/cuprene, for example.

### BRIEF SUMMARY

The invention relates to a method of adsorbing an arsenic material, as defined in any one of claims 1 to 9. The method comprises: contacting an arsenic-containing fluid with an adsorbent composition, the adsorbent composition comprising: a bismuth material on a support comprising at least one of a metal oxide, a metalloid oxide or an activated carbon, wherein the support comprises a moisture content of about 15% by mass or less, wherein the moisture content is measurable by a thermogravimetric analyser (TGA).

The bismuth material can be any bismuth-containing material including elemental bismuth and bismuth compounds. For example, the bismuth material can be a bismuth oxide such as bismuth (III) oxide (Bi₂O₃). In certain example aspects, the bismuth oxide can be derived from a precursor such as an organic bismuth compound, an inorganic bismuth compound, an organic bismuth salt, an inorganic bismuth salt and combinations thereof. For example, the bismuth oxide can be at least partially derived from a bismuth citrate precursor, a bismuth nitrate precursor or a combination thereof. The adsorbent composition can include about 0.1% to about 2% by mass, or about 2% to about 50% by mass, or about 5% to about 15% by mass, or about 8% to about 11% by mass of the bismuth material, measurable by inductively coupled plasma spectrometry (ICP).

In example certain aspects, the support can be a metal oxide such as a high surface area metal oxide. For example, the metal oxide can be a titanium oxide, a cerium oxide, an aluminum oxide, a silicon oxide, zirconium oxide, magnesium oxide, zeolites, activated carbon and mixtures thereof. The support can further include silicon dioxide (SiO₂). In certain aspects, the adsorbent composition can include at least 5% by mass, or at least 50% by mass, or at least 75% by mass of the metal oxide. According to various example aspects, the metal oxide of the support can include particles having a size of about 1 µm to about 10 mm. The metal oxide on the support can have a surface area of about 20 m²/g to about 600 m²/g, or about 50 m²/g to about 600 m²/g, or about 250 m²/g to about 350 m²/g. The adsorbent composition of claim 1, wherein the adsorbent composition further comprises on the support at least one compound selected from a group consisting of a silver oxide, an iron oxide, a manganese oxide, a cerium oxide, a vanadium oxide, a tin oxide and mixtures thereof. In yet further example aspects, the support can have a pore volume of about 0.01 cc/g to about 5 cc/g, or about 0.2 cc/g to about 1 cc/g. Additionally, the support can have a pore size of about 1 Å to about 750 Å, or about 10 Å to about 500 Å. In certain aspects, the support is moisture-free.

The arsenic material can be any arsenic-containing material such as elemental arsenic and arsenic compounds. The adsorbent composition can include about 0.01% to about 20% by mass, or about 0.1% to about 15% by mass or about 0.5% to about 7% by mass of the arsenic material.

In certain example aspects of the disclosure, the adsorbent composition made by the above method can have a lead content of about 5% by mass or less or the adsorbent composition can be lead-free. The adsorbent composition can be a tablet, an extrudate, a pellet, a rod, a molding and/or a monolith.

According to various example aspects of the disclosure, the adsorbent composition made by the above method can have an arsine removal efficiency of about 90% or more as measured by a dry colorimetry method using an arsine analyzer. In further example aspects, the adsorbent composition can have an arsine removal efficiency of about 100% as measured by a dry colorimetry method using an arsine analyzer.

In certain example aspects, the arsenic-containing fluid employed in the method as defined in the claims is part of a process stream which can be a part of a petroleum process, a petrochemical process, a polymerization process, a synthesis gas process or a semiconductor process. In yet further example aspects, the process stream can be a part of a petrochemical process, the process stream comprising natural gas. For example, the process stream can include a gas such as refinery off-gas, fluid catalytic cracking off-gas, steam cracker off-gas, shale gas and combinations thereof, the gas containing reactive components comprising at least one of acetylene, methyl acetylene and propadiene.

In various example aspects, the adsorbent composition comprises: a bismuth oxide on a support comprising a metal oxide, wherein the bismuth oxide may be derived from a bismuth citrate precursor.

According to further example aspects, the adsorbent comprises: a bismuth material on a support comprising a titanium oxide; and an arsenic material adsorbed onto a surface of the adsorbent.

In further example aspects, the adsorbent composition comprises: a mixture of a bismuth oxide and at least one active material, such as an active metal oxide on a support, wherein the at least one active metal oxide is selected from a group consisting of a silver oxide, an iron oxide, a manganese oxide, a cerium oxide, a vanadium oxide, a tin oxide and mixtures thereof, and wherein the bismuth oxide may be derived from any suitable source of bismuth including bismuth inorganic salts, bismuth organic salts, bismuth oxide powder and bismuth citrate precursor.

In yet further example aspects, the adsorbent composition is made by a method comprising: dispersing a bismuth oxide on a support comprising a metal oxide comprising contacting the support with a precursor comprising any suitable source of bismuth including bismuth inorganic salts, bismuth organic salts, bismuth oxide powder and bismuth citrate.

According to further example aspects, the disclosure is directed to a method of adsorbing arsine as defined in the claims, comprising: contacting an arsine-containing fluid with an adsorbent composition comprising: a bismuth oxide on a support comprising a titanium oxide, wherein the bismuth oxide may be derived from any suitable source of bismuth including bismuth inorganic salts, bismuth organic salts, bismuth oxide powder and a bismuth citrate precursor.

In yet further example aspects, the adsorbent composition comprising: a bismuth oxide on a support comprising a titanium oxide; and arsine adsorbed onto a surface of the adsorbent.

Although the present invention can be used to purify any appropriate fluid stream containing arsine or its compounds, the invention is particularly effective in the purification of hydrocarbon streams, in particular, olefins (i.e. ethylene, propylene), fluid catalytic cracking (FCC) off-gas, refinery off-gas, petroleum fractions and natural gas. In certain embodiments, the arsine removal process is carried out by passing a fluid containing arsine compound through the adsorbent fixed bed. The process can be carried out in a liquid phase or a gas phase. Non-limiting process conditions comprise temperatures from ambient to about 130 °C and pressures from about 1 atm to about 25 atm. In certain embodiments, liquid-phase processes are performed at LHSV from about 1 to about 10 h⁻¹ while gas phase processes are carried out at GHSV from about 1,000 to about 10,000 h⁻¹. Arsine concentrations in the feed stream may depend on a nature of the feed but most generally range, e.g., from about 0.1 to 5 ppm. Arsine concentration in effluent stream after purification stage may be in a range, e.g., from 0 to 20 ppb.

The above summary provides a basic understanding of the disclosure. This summary is not an extensive overview of all contemplated aspects, and is not intended to identify all key or critical elements or to delineate the scope of any or all aspects of the disclosure. Its sole purpose is to present one or more aspects in a summary form as a prelude to the more detailed description that follows and the features described and particularly pointed out in the claims and embodiments.

### BRIEF DESCRIPTION OF THE DRAWINGS

FIG. 1 shows a comparison of a bismuth oxide on titanium oxide adsorbent with a lead oxide on aluminum oxide adsorbent for removing arsine in accordance with various example aspects of the disclosure.
FIG. 2 shows a comparison of bismuth oxide on titanium oxide adsorbents with a lead oxide on aluminum oxide adsorbent for removing arsine in accordance with various example aspects of the disclosure.
FIG. 3 shows a comparison of a titanium oxide adsorbent with a bismuth oxide on titanium oxide adsorbent for removing arsine in accordance with various example aspects of the disclosure.
FIG. 4 shows a comparison of bismuth on titanium oxide adsorbents with a lead oxide on aluminum oxide adsorbent for removing arsine in accordance with various example aspects of the disclosure.

### DETAILED DESCRIPTION

Example aspects are described herein in the context of the method as defined in the claims. Those of ordinary skill in the art will recognize that the following description is illustrative only and is not intended to be in any way limiting. Other aspects will readily suggest themselves to those of ordinary skill in the art having the benefit of this disclosure. Reference will now be made in detail to implementations of the example aspects as illustrated in the accompanying drawings. The same reference indicators will be used to the extent possible throughout the drawings and the following description to refer to the same or like items.

According to various example aspects, the disclosure is directed to adsorbents employed in the method as defined in the claims (for both liquids and gases) having an active material such as an active metal oxide on a support containing an activated carbon, a metalloid oxide or a metal oxide, for example, a high surface area metal oxide. Suitable further active metal oxides include a silver oxide (AgₓO_{y}), an iron oxide (FeₓO_{y}), a manganese oxide (MnₓO_{y}), a cerium oxide (CeₓO_{y}), a vanadium oxide (VₓO_{y}), a tin oxide (SnₓO_{y}) and mixtures thereof, wherein x and y are integers. Suitable metal oxides (e.g., high surface area metal oxides) for the support include, but are not limited to, a titanium oxide (TiₓO_{y}), a cerium oxide (CeₓO_{y}), an aluminum oxide (AlₓO_{y}), a silicon oxide (SiₓO_{y}), magnesium oxide, alumo-silicates/zeolites and combinations thereof, wherein x and y are integers. The adsorbent composition comprises a bismuth material, for example, elemental bismuth or a bismuth oxide (BiₓO_{y}) on a support containing a titanium oxide (TiₓO_{y}). In certain aspects, the adsorbent may contain bismuth (III, V) oxides on a support containing titanium dioxide (TiO₂), for example. In yet further example aspects, the adsorbent may contain bismuth (III) oxide (Bi₂O₃) as the sole active agent on a support containing TiO₂.

The amount of the active material, for example, active metal oxide, per total weight of the adsorbent may vary depending on the type and anticipated concentration (in the process stream) of the reactive compound(s) to be adsorbed. The concentration of active material, for example, active metal oxide, per total weight of the adsorbent may be, for example, about 2 wt% to about 50 wt%. In certain example aspects, the concentration of the active material, for example, active metal oxide may be about 5 wt% to about 40 wt%, about 5 wt% to about 15 wt%, or about 8 wt% to about 11 wt%. In certain aspects, the concentration of the active agent may be about 9.4 wt%.

In accordance with various example aspects of the disclosure, the adsorbent may contain about 5 wt% or less of lead oxide as the active material, for example, active metal oxide. In certain example aspects the lead content may be about 4 wt%, about 3 wt%, about 2 wt% or about 1 wt%. The adsorbent may also be lead-free. The term "lead-free" will be understood to mean that the adsorbent contains only trace amounts of lead e.g., about 10,000 ppm or less, or about 5,000 ppm or less, or about 1000 ppm or less, or about 500 ppm or less, such that the lead content may be zero or undetectable as measured by, for example, an X-ray fluorescence ("XRF") spectrometer. Other techniques and instruments known to those of ordinary skill in the art for measuring trace amounts of lead may also be used.

The support may be formed from one or more metal oxide, metalloid oxide or activated carbon. For example, where the active material is an active metal oxide and is on a support containing a titanium oxide, the support may be formed from only the titanium oxide. In certain example aspects, the support may contain the titanium oxide in addition to one or more other metal oxide. For example, the support may contain at least 50 wt% of a titanium oxide (TiₓO_{y}), or the support may contain at least 75 wt% of a titanium oxide (TiₓO_{y}) with the balance being one or more other metal oxide, for example, a silver oxide (AgₓO_{y}), an iron oxide (FeₓO_{y}), a manganese oxide (MnₓO_{y}), a cerium oxide (CeₓO_{y}), a vanadium oxide (VₓO_{y}), a tin oxide (SnₓO_{y}) and combinations thereof. The metal oxide for the support may be in any crystalline form. For example, the titanium oxide may be titanium dioxide in anatase, brookite or rutile form. In certain aspects, the titanium oxide may be in anatase form. In certain embodiments, the metalloid oxide may be silicon dioxide (SiO2). In other embodiments, the support may comprise activated carbon.

The characteristics of the support may have a significant effect on the performance of the adsorbent to remove a reactive compound from a process stream. The support characteristics may facilitate high dispersion of the active material on a surface of the support and may maintain such dispersion through the adsorption process. In various example aspects of the disclosure, the support may have a surface area of about 10 m²/g to about 600 m²/g, about 20 m²/g to about 300 m²/g or about 250 m²/g to about 350 m²/g. For example, the surface area may be about 290 m²/g (e.g., for TiO₂ G5). The support may have a pore volume of about 0.01 cc/g to about 5 cc/g, or about 0.2 cc/g to about 1 cc/g. For example, the pore volume may be about 0.4 cc/g (e.g., for TiO₂ G5). Additionally, the support may have a pore size of about 1 to about 750 Å, or about 10 to about 500 Å. For example, the support may have a pore size of about 55 Å (e.g., for TiO₂ G5). These and other characteristics can be optimized by those of ordinary skill in the art based on the type and concentration of the reactive compounds to be adsorbed and the composition of the adsorbent.

The moisture content of the support may also critically affect the performance of the adsorbent to adsorb a reactive compound from a process stream. In accordance with various example aspects, the support may be moisture-free. The term "moisture-free" will be understood to mean that the support contains only trace amounts of water, e.g., about 5 wt% or less, or about 1 wt% or less, or about 0.5 wt% or less or about 0.1 wt% or less such that the moisture content may be zero or undetectable as measured by, for example, a Thermogravimetric analyzer ("TGA"). Other techniques and instruments known to those of ordinary skill in the art for measuring trace amounts of water may also be used.

According to various example aspects of the disclosure, adsorbent compositions containing bismuth oxide (e.g., about 9.4 wt% bismuth (III) oxide derived from a citrate precursor) on a titanium oxide support may have a removal efficiency of arsine of about 100% for a period of about 45 hours or longer. Even after about 80 hours, the removal efficiency of the adsorbent may be about 85% or more. For an adsorbent containing bismuth oxide (e.g., about 9.4 wt% bismuth (III) oxide) derived from a nitrate precursor on a titanium oxide support, the arsine removal efficiency may be 100% for about 36 hours or longer and may be at about 78% even after about 56 hours.

The adsorbents described herein employed in the method as defined in the claims may be manufactured by any suitable means known to those of ordinary skill in the art. For example, active material, for example, active metal oxide, particles may be formed in pores of the support by active material, for example, metal oxide, precursor impregnation, precipitation, deposition or strong electrostatic adsorption and/or any other method known to those of ordinary skill in the art, followed by calcination to decompose the active material, for example, metal oxide, precursor. Alternatively, the active material, for example, active metal oxide, can comprise some fraction of a physical mixture of active material, for example, active metal oxide, and a high surface area substrate and/or a binder. Where the adsorbent is intended to contain a bismuth material such as elemental bismuth or bismuth oxide as the active material, for example, active metal oxide, any suitable bismuth precursor can be used. For example, a bismuth precursor derived from organic acid salts/complexes (e.g., citrates, nitrates, etc.) and inorganic acid salts can be used. A bismuth citrate precursor, in particular, can lower the calcination temperature and suppress the sintering of the bismuth oxide at high temperatures (e.g., during high temperature calcination). The adsorbents can be manufactured in any suitable form, for example, as tablets, extrudates, pellets, rod, moldings, monoliths, etc. in various shapes and sizes.

According to various example aspects, also disclosed are methods for removing impurities, for example, an arsenic material such as arsine, elemental arsenic and arsenic derivatives from a process stream (liquid or gas) using the adsorbents. The process stream may be from, for example, a petroleum, petrochemical, polymerization, synthesis gas ("Syngas") and semiconductor process. For instance, the process may be a refinery off gas ("ROG") process , a fluid catalytic cracking ("FCC") off-gas process, a stem cracker off-gas process, a natural gas process and/or a shale gas process. The process streams may contain one or more reactive compounds including, but not limited to, acetylene and propadiene ("MAPD") or components with significant reducing capacity such as hydrogen. The process streams may contain alkenes, carbon monoxide, carbon dioxide, nitrogen oxides (NOₓ), oxygen, thiol, hydrogen sulfide and sulfur oxides (SOₓ), carbonyl sulfide (COS), mercaptans and other sulfur compounds. In certain example aspects, a process stream may contain, for example, arsine at a concentration of about 0.1 ppmw to about 100 ppmw, or about 0.1 ppmw to about 0.5 ppmw.

According to various example aspects, the adsorbents may be used as materials in any suitable equipment, including, but not limited to packed bed columns, fluidized beds, monoliths, cartridge filters, semiconductor process tools, and other equipment known to those of ordinary skill in the art. Methods for removing a reactive compound from a process stream using the adsorbents (e.g., adsorption processes) may be operated at any suitable temperature. For example, an adsorption process may operate at about 10°C to about 150°C, about 20°C to about 100°C, or about 20°C to about 80°C. In certain aspects, if the process stream is a liquid, the adsorption process may operate at a temperature of about 50°C; for a gas stream the adsorption process may operate at a temperature of about 130°C. The operating pressure of the adsorption process may be, for example, about 1 bar to about 100 bar, about 1 bar to about 50 bar, or about 1 bar to about 20 bar. For a liquid phase process stream the gas hourly space velocity ("GHSV") may be about 20 h⁻¹ or less and for a gas phase process stream the GHSV may be about 10,000 h⁻¹.
The following embodiments further describe the present invention:
1. A method of adsorbing an arsenic material, comprising:
   contacting an arsenic-containing fluid with an adsorbent composition, the adsorbent composition comprising a bismuth material on a support comprising at least one of a metal oxide, a metalloid oxide or an activated carbon, wherein the support comprises a moisture content of about 15% by mass or less,
   wherein the moisture content is measurable by a thermogravimetric analyser (TGA).
2. The method of embodiment 1, wherein the bismuth material is selected from a group consisting of elemental bismuth and a bismuth compound.
3. The method of embodiment 1, wherein the bismuth material comprises a bismuth oxide.
4. The method of embodiment 3, wherein the bismuth oxide is derived from a precursor selected from a group consisting of an organic bismuth compound, an inorganic bismuth compound, an organic bismuth salt and an inorganic bismuth salt.
5. The method of embodiment 3, wherein the bismuth oxide is at least partially derived from a bismuth citrate precursor, a bismuth nitrate precursor or a combination thereof.
6. The method of embodiment 3, wherein the bismuth oxide is bismuth (III) oxide (Bi₂O₃).
7. The method of embodiment 1, wherein the support comprises a metal oxide.
8. The method of embodiment 7, wherein the metal oxide is a high surface area metal oxide.
9. The method of embodiment 7, wherein the metal oxide is selected from a group consisting of a titanium oxide, a cerium oxide, an aluminum oxide, a silicon oxide, zirconium oxide, magnesium oxide, zeolites, activated carbon and mixtures thereof.
10. The method of embodiment 7, wherein the metal oxide comprises titanium dioxide.
11. The method of embodiment 10, wherein the titanium dioxide is in an anatase form.
12. The method of embodiments 7 to 11 further comprising silicon dioxide (SiO₂).
13. The method of embodiment 1, wherein the arsenic material is selected from a group consisting of elemental arsenic and an arsenic-containing compound.
14. The method of embodiment 1, wherein the arsenic-containing fluid comprises arsine.
15. The method of embodiment 1, wherein the adsorbent composition comprises a lead content of about 5% by mass or less.
16. The method of embodiment 1, wherein the adsorbent composition is lead-free.
17. The method of embodiment 1, comprising about 0.01% to about 20% by mass of the arsenic material.
18. The method of embodiment 1, comprising about 0.1% to about 15% by mass of the arsenic material.
19. The method of embodiment 1, comprising about 0.5% to about 7% by mass of the arsenic material.
20. The method of embodiment 1, comprising about 0.1% to about 2% by mass of the bismuth material, measurable by inductively coupled plasma spectrometry (ICP).
21. The method of embodiment 1, comprising about 2% to about 50% by mass of the bismuth material, measurable by inductively coupled plasma spectrometry (ICP).
22. The method of embodiment 21, comprising about 5% to about 15% by mass of the bismuth material, measurable by inductively coupled plasma spectrometry (ICP).
23. The method of embodiment 22, comprising about 8% to about 11% by mass of the bismuth material, measurable by inductively coupled plasma spectrometry (ICP).
24. The method of embodiment 7, wherein the support comprises at least 5% by mass of the metal oxide.
25. The method of embodiment 24, wherein the support comprises at least 50% by mass of the metal oxide.
26. The method of embodiment 25, wherein the support comprises at least 75% by mass of the metal oxide.
27. The method of embodiments 7-11, wherein the metal oxide comprises particles having a size of about 1 µm to about 10 mm.
28. The method of embodiments 7-11, wherein the metal oxide has a surface area of about 50 m²/g to about 600 m²/g.
29. The method of embodiment 1, wherein the support contains 5 wt% or less water, measurable by a thermogravimetric analyser.
30. The method of embodiment 1, wherein a surface area of the support is about 20 m²/g to about 600 m²/g.
31. The method of embodiment 30, wherein the surface area is about 250 m²/g to about 350 m²/g.
32. The method of embodiment 1, wherein the adsorbent composition is in a form selected from a group consisting of a tablet, an extrudate, a pellet, a rod, a molding and a monolith.
33. The method of embodiment 1, wherein the adsorbent composition has an arsine removal efficiency of about 90% or more as measured by a dry colorimetry method using an arsine analyzer.
34. The method of embodiment 1, wherein the adsorbent composition has an arsine removal efficiency of about 100% as measured by a dry colorimetry method using an arsine analyzer.
35. The method of embodiment 1, wherein the adsorbent composition further comprises on the support at least one compound selected from a group consisting of a silver oxide, an iron oxide, a manganese oxide, a cerium oxide, a vanadium oxide, a tin oxide and mixtures thereof.
36. The method of embodiment 1, wherein the support comprises a pore volume of about 0.01 cc/g to about 5 cc/g.
37. The method of embodiment 36, wherein the support comprises a pore volume of about 0.2 cc/g to about 1 cc/g.
38. The method of embodiment 1, wherein the support comprises a pore size of about 1 Å to about 750 Å.
39. The method of embodiment 38, wherein the support comprises a pore size of about 10 Å to about 500 Å.
40. The method of embodiment 1, wherein the process stream is part of a process selected from a group consisting of a petroleum process, a petrochemical process, a polymerization process, a synthesis gas process and a semiconductor process.
41. The method of embodiment 40, wherein the process stream is a part of a petrochemical process, the process stream comprising natural gas.
42. The method of embodiment 40, wherein the process stream comprises a gas selected from a group consisting of refinery off-gas, fluid catalytic cracking off-gas, steam cracker off-gas, shale gas and combinations thereof, the gas containing reactive components comprising at least one of acetylene, methyl acetylene and propadiene.

### EXAMPLES

### Example 1A - Synthesis of bismuth oxide on titanium oxide (Bi/TiO₂) adsorbent derived from bismuth citrate.

Bi/TiO₂ adsorbent was prepared using an incipient wetness impregnation method. More specifically, 4.95 grams of bismuth citrate was dissolved in 30 grams of ammonium hydroxide (29 % NH₄OH) and resultant solution was mixed for about 30 minutes until full dissolution of the bismuth citrate has been observed. An amount of this solution was impregnated on a dry titanium oxide (Anatase) powder to achieve 97% pore volume fill of the carrier. The resultant powder was dried overnight at 110°C and calcined at 400°C for 2 hours to yield a Bi loading of about 9.4 wt % as determined by inductively coupled plasma spectrometry ("ICP"). Thermogravimetric Analysis ("TGA") measurements confirmed full decomposition of the bismuth citrate in a calcined powder while x-ray photoelectron spectroscopy ("XPS") indicated the presence of Bi in +3 oxidation state suggesting Bi₂O₃ as a primary compound of Bi in a material.

### Example 1B - Synthesis of bismuth oxide on titanium oxide (Bi/TiO₂) adsorbent derived from bismuth nitrate.

Bi/TiO₂ adsorbent was prepared using an incipient wetness impregnation method. Bismuth nitrate stock solution (22.3 wt % Bi) was used as the Bi source. An amount of this solution was impregnated on a dry titanium oxide (Anatase) powder to achieve 97% pore fill of the carrier. The resultant powder was dried overnight at 110°C and calcined at 400°C for 2 hours to yield Bi loading of about 9.7 wt% as determined by ICP. Complete decomposition of the bismuth nitrate precursor in the calcined material was confirmed with TGA. XPS measurements also confirmed Bi +3 as a major form of Bi in a resultant material.

### Example 1C - Comparison of a bismuth oxide on titanium oxide adsorbent (Bi/TiO₂) with a lead oxide on aluminum oxide adsorbent (Pb/Al₂O₃)(prior art) for removing arsine.

### Experimental Conditions:

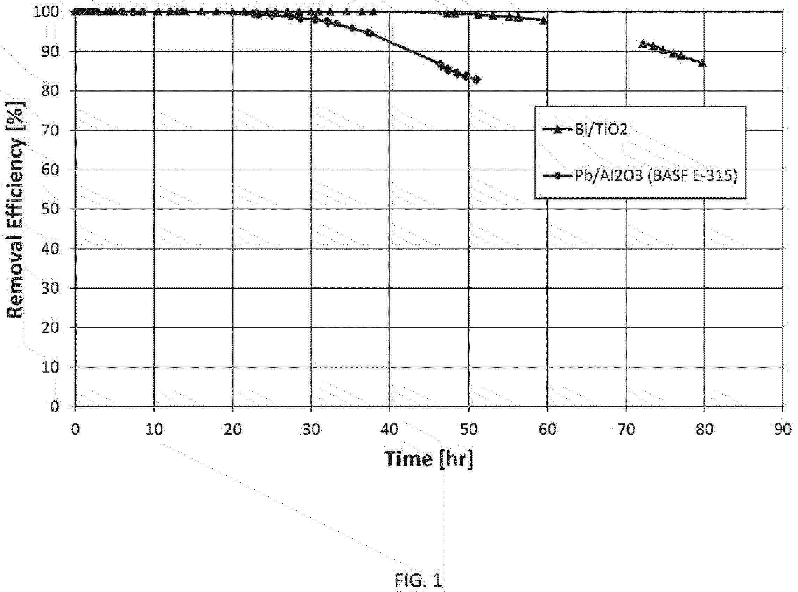

About 1 cubic centimeter of an adsorbent containing bismuth oxide on titanium dioxide (prepared as described above) was loaded into a reactor. A fluid containing about 100 ppmw of arsine in propane was passed through the reactor and over the adsorbent for a period of time at a liquid hourly space velocity ("LHSV") of 10 h⁻¹. The fluid was at ambient temperature, liquid phase about 220 psig. Arsine was adsorbed onto the adsorbent from the fluid. The experiment was repeated at the same conditions with about 1 cubic centimeter of an adsorbent containing lead oxide on aluminum oxide (approximately 20 wt % PbO) loaded into the reactor. The results are shown in FIG. 1.

As shown in FIG. 1, the removal efficiency (%) of arsine as a function of time was comparable for both adsorbents at 100% for about 22 hours. However, thereafter, the removal efficiency of the Pb/Al₂O₃ began to decline while the removal efficiency of the Bi/TiO₂ remained at 100% until about 45 hours. At about 52 hours, the removal efficiency of the Pb/Al₂O₃ decreased to about 83% whereas the removal efficiency of the Bi/TiO₂ remained high at about 99%. Even after another about 30 hours, the removal efficiency of the Bi/TiO₂ not declined to that of the Pb/Al₂O₃. The arsenic content was measured in spent Bi/TiO₂ and Pb/Al₂O₃ materials and was found to be 4.2 wt % and 2.4 wt %, respectively.

### Example 2 - Comparison of a bismuth oxide (derived from a citrate precursor) on titanium oxide adsorbent (Bi/TiO₂(citrate)) with a bismuth oxide (derived from a nitrate precursor) on titanium oxide adsorbent (Bi/TiO₂(nitrate)) and a lead oxide on aluminum oxide adsorbent (Pb/Al₂O₃)(prior art) for removing arsine.

### Experimental Conditions:

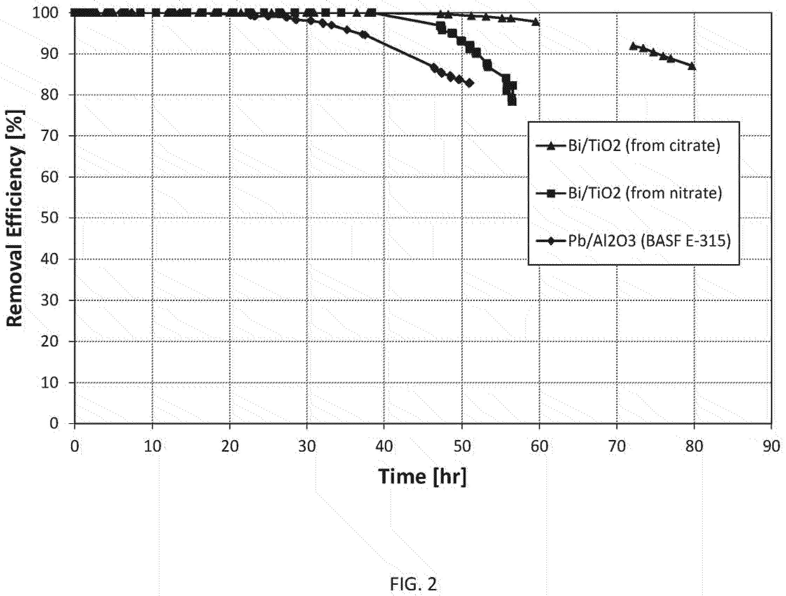

About 1 cubic centimeter of an adsorbent containing bismuth oxide derived from a citrate precursor on titanium oxide was loaded into a reactor. A fluid containing about 100 ppmw of arsine in propane was passed through the reactor and over the adsorbent for a period of time at a liquid hourly space velocity ("LHSV") of 10 h⁻¹. The fluid was at ambient temperature (25 °C), liquid phase about 220 psig. Arsine was adsorbed onto the adsorbent from the fluid. The experiment was repeated at the same conditions with about 1 cubic centimeter of an adsorbent containing bismuth derived from a nitrate precursor on titanium oxide and again with about 1 cubic centimeter of an adsorbent containing lead on aluminum oxide. The results are shown in FIG. 2.

As shown in FIG. 2, the removal efficiency (%) of arsine as a function of time was comparable for all three adsorbents for about 22 hours. However, thereafter, the removal efficiency of the Pb/Al₂O₃ began to decline while the removal efficiency of the Bi/TiO₂(citrate) and the Bi/TiO₂(nitrate) remained at 100% until about 38 hours. At this time, the removal efficiency of the Bi/TiO₂(nitrate) began to decline, while the removal efficiency of the Bi/TiO₂(citrate) remained at 100% until about 45 hours. At about 52 hours, the removal efficiency of the Pb/Al₂O₃ decreased to about 83% while at about 56 hours the removal efficiency of the Bi/TiO₂(nitrate) decreased to about 79%. However, the removal efficiency of the Bi/TiO₂(citrate) remained high at about 99% at 52 hours and was at about 97% at about 56 hours. Even after another about 25 hours, the removal efficiency of the Bi/TiO₂(citrate) had not declined to that of the Pb/Al₂O₃ or the Bi/TiO₂(nitrate). The arsenic content in a spent Bi/TiO₂ (nitrate) sample was measured to be 3.1 wt %.

### Example 3 - Comparison of a titanium oxide adsorbent (TiO₂) with a bismuth oxide on titanium oxide adsorbent (Bi/TiO₂) for removing arsine.

### Experimental Conditions:

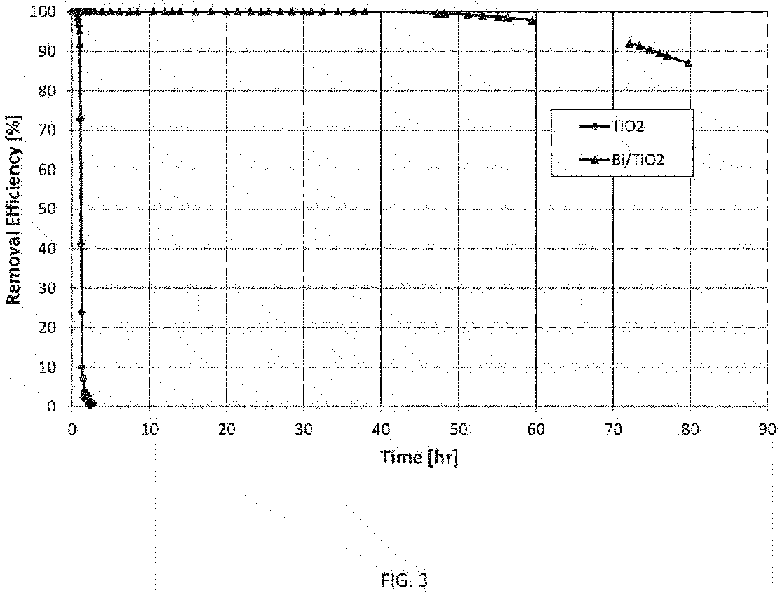

About 1 cubic centimeter of a titanium oxide adsorbent was loaded into a reactor. A fluid containing about 100 ppmw of arsine in propane was passed through the reactor and over the adsorbent for a period of time at a liquid hourly space velocity ("LHSV") of 10 h⁻¹. The fluid was at ambient temperature (25 °C), liquid phase about 220 psig. Arsine was adsorbed onto the adsorbent from the fluid. The experiment was repeated at the same conditions with about 1 cubic centimeter of an adsorbent containing bismuth oxide on titanium dioxide. The results are shown in FIG. 3.

As shown in FIG. 3, the removal efficiency (%) of arsine as a function of time of the Bi/TiO₂ was significantly higher than the TiO₂. The addition of bismuth oxide to titanium dioxide extended the adsorbent life by about 77 hours or more. This example indicates that titanium oxide (TiO₂) alone is inactive in removal of arsine from a fluid while a Bi/TiO₂ adsorbent system exhibits high activity in arsine capture.

### Example 4 - Comparison of bismuth oxide on titanium oxide adsorbents (Bi/TiO₂) with a lead oxide on aluminum oxide adsorbent (Pb/Al₂O₃)(prior art) for removing arsine.

### Experimental Conditions:

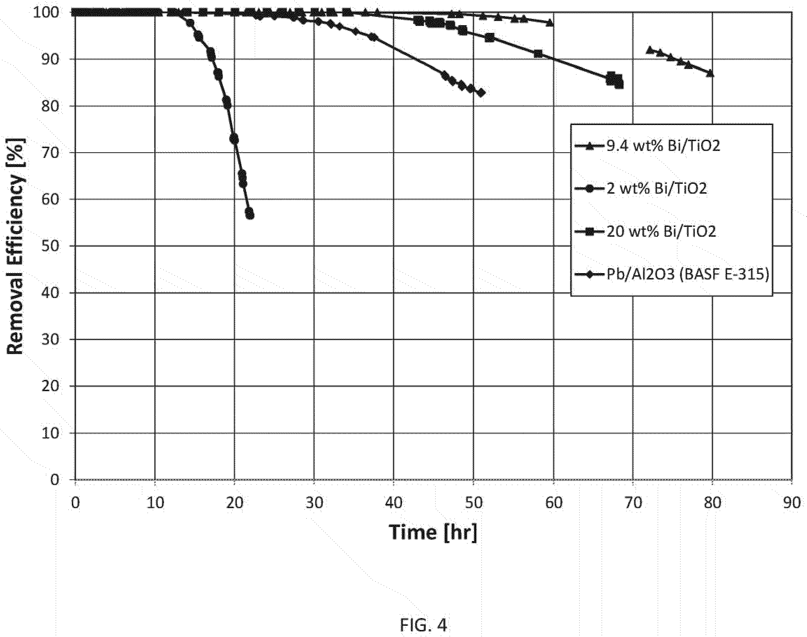

About 1 cubic centimeter of an adsorbent containing about 2 wt% bismuth oxide on titanium dioxide (Bi/TiO₂(2 wt%)) was loaded into a reactor. A fluid containing about 100 ppmw of arsine in propane was passed through the reactor and over the adsorbent for a period of time at a liquid hourly space velocity ("LHSV") of 10 h⁻¹. The fluid was at ambient temperature (25 °C), liquid phase about 220 psig. Arsine was adsorbed onto the adsorbent from the fluid. The experiment was repeated at the same conditions with about 1 cubic centimeter of an adsorbent containing about 9.4 wt% bismuth on titanium dioxide (Bi/TiO₂(9.4 wt%)), an adsorbent containing about 20 wt% bismuth on titanium dioxide (Bi/TiO₂(20 wt%)) and an adsorbent containing lead oxide on aluminum oxide (Pb/Al₂O₃ (about 20 wt % PbO)) loaded into the reactor. The results are shown in FIG. 4.

As shown in FIG. 4, the removal efficiency (%) of arsine as a function of time was comparable for all adsorbents for about 13 hours. However, thereafter, the removal efficiency of the Bi/TiO₂(2 wt%) began to sharply decline as compared to the other adsorbents. At about 22 hours the removal efficiency of Pb/Al₂O₃ began to decline while the removal efficiency of the Bi/TiO₂(9.4 wt%) and the Bi/TiO₂(20 wt%) remained at 100% until about 34 hours. Thereafter, the removal efficiency of the Bi/TiO₂(9.4 wt%) remained at 100% until about 45 hours whereas the removal efficiency of the Bi/TiO₂(20 wt%) began to decline at about 35 hours. At about 52 hours, the removal efficiency of the Pb/Al₂O₃ decreased to about 83% whereas the removal efficiency of the Bi/TiO₂(9.4 wt%) remained high at about 99%. Even after another about 30 hours, the removal efficiency of the Bi/TiO₂(9.4 wt%) had not declined to that of the Bi/TiO₂(20 wt%) or the Pb/Al₂O₃. The resulting uptake of arsenic in the Bi/TiO₂(20 wt%) and Bi/TiO₂(2 wt%) samples was found to be about 3.7 wt % and about 1.2 wt %, respectively. This finding suggests that a bismuth oxide supported on titanium dioxide adsorbent system is active in arsine removal at a very small loading of the bismuth, for example, at least a Bi content of as low as about 2 wt %.

It is to be understood that the phraseology or terminology used herein is for the purpose of description and not of restriction, such that the terminology or phraseology of the present specification may be interpreted by those of ordinary in the art in light of the teachings and guidance presented herein, in combination with the knowledge of those of ordinary skill in the relevant art(s).

## Claims

1. A method of adsorbing an arsenic material, comprising:
contacting an arsenic-containing fluid with an adsorbent composition, the adsorbent composition comprising a bismuth material on a support comprising at least one of a metal oxide, a metalloid oxide or an activated carbon, wherein the support comprises a moisture content of about 15% by mass or less,
wherein the moisture content is measurable by a thermogravimetric analyser.

2. The method of claim 1, wherein the bismuth material is selected from a group consisting of elemental bismuth and a bismuth compound.

3. The method of claim 1, wherein the bismuth material comprises a bismuth oxide, preferably wherein the bismuth oxide is derived form a precursor selected from a group consisting of an organic bismuth compound, an inorganic bismuth compound, an organic bismuth salt, an inorganic bismuth salt, and combinations thereof, or preferably wherein the bismuth oxide is at least partially derived from a bismuth citrate precursor, a bismuth nitrate precursor, or a combination thereof, or preferably wherein the bismuth oxide is bismuth (III) oxide (Bi₂O₃).

4. The method of claim 1, comprising about 5% to about 15% by mass of the bismuth material, measurable by inductively coupled plasma spectrometry.

5. The method of claim 1, wherein the support contains 5 wt% or less water, measurable by a thermogravimetric analyser.

6. The method of claim 1, wherein the support comprises a metal oxide selected from a group consisting of a titanium oxide, a cerium oxide, an aluminum oxide, a silicon oxide, zirconium oxide, magnesium oxide, zeolites, activated carbon, and mixtures thereof, or wherein the metal oxide comprises titanium dioxide, preferably wherein the titanium dioxide is in an anatase form.

7. The method of claim 1, wherein the adsorbent composition comprises a lead content of about 5% by mass or less, measurable by an X-ray fluorescence spectrometer, preferably wherein the adsorbent composition is lead-free.

8. The method of claim 1, wherein the arsenic material is selected from a group consisting of elemental arsenic and an arsenic-containing compound.

9. The method of claim 1, wherein the arsenic-containing fluid is part of a process stream from a process selected from a group consisting of a petroleum process, a petrochemical process, a polymerization process, a synthesis gas process and a semiconductor process.

## Patentansprüche

1. Ein Verfahren zur Adsorption eines arsenhaltigen Materials, umfassend:
Inkontaktbringen einer arsenhaltigen Flüssigkeit mit einer Adsorbenszusammensetzung, wobei die Adsorbenszusammensetzung ein Bismutmaterial auf einem Träger umfasst, der mindestens eines von einem Metalloxid, einem Metalloidoxid oder einer Aktivkohle umfasst, wobei der Träger einen Feuchtigkeitsgehalt von etwa 15 Gew.-% oder weniger aufweist,
wobei der Feuchtigkeitsgehalt mit einem thermogravimetrischen Analysator messbar ist.

2. Das Verfahren nach Anspruch 1, wobei das Bismutmaterial aus einer Gruppe ausgewählt ist, bestehend aus elementarem Bismut und einer Bismutverbindung.

3. Das Verfahren nach Anspruch 1, wobei das Bismutmaterial ein Bismutoxid umfasst, vorzugsweise wobei das Bismutoxid von einem Vorläufer abgeleitet ist, ausgewählt aus einer Gruppe bestehend aus einer organischen Bismutverbindung, einer anorganischen Bismutverbindung, einem organischen Bismutsalz, einem anorganischen Bismutsalz und Kombinationen davon, oder vorzugsweise wobei das Bismutoxid zumindest teilweise von einem Bismutcitrat-Vorläufer, einem Bismutnitrat-Vorläufer oder einer Kombination davon abgeleitet ist, oder vorzugsweise wobei das Bismutoxid Bismut(III)-oxid (Bi₂O₃) ist.

4. Das Verfahren nach Anspruch 1, umfassend etwa 5 Gew.-% bis etwa 15 Gew.-% des Bismutmaterials, messbar mittels induktiv gekoppelter Plasma-Spektrometrie.

5. Das Verfahren nach Anspruch 1, wobei der Träger 5 wt% oder weniger Wasser enthält, messbar mit einem thermogravimetrischen Analysator.

6. Das Verfahren nach Anspruch 1, wobei der Träger ein Metalloxid umfasst, ausgewählt aus einer Gruppe bestehend aus einem Titanoxid, einem Ceroxid, einem Aluminiumoxid, einem Siliciumoxid, einem Zirkoniumoxid, einem Magnesiumoxid, Zeolithen, Aktivkohle und Mischungen davon, oder wobei das Metalloxid Titandioxid umfasst, vorzugsweise wobei das Titandioxid in einer Anatas-Form vorliegt.

7. Das Verfahren nach Anspruch 1, wobei die Adsorbenszusammensetzung einen Bleigehalt von etwa 5 Gew.-% oder weniger umfasst, messbar mit einem Röntgenfluoreszenzspektrometer, vorzugsweise wobei die Adsorbenszusammensetzung bleifrei ist.

8. Das Verfahren nach Anspruch 1, wobei das arsenhaltige Material aus einer Gruppe ausgewählt ist, bestehend aus elementarem Arsen und einer arsenhaltigen Verbindung.

9. Das Verfahren nach Anspruch 1, wobei die arsenhaltige Flüssigkeit Teil eines Prozessstroms aus einem Verfahren ist, ausgewählt aus einer Gruppe bestehend aus einem Erdölverfahren, einem petrochemischen Verfahren, einem Polymerisationsverfahren, einem Synthesegasverfahren und einem Halbleiterverfahren.

## Revendications

1. Un procédé d'adsorption d'un matériau arsenical, comprenant :
mettre en contact un fluide contenant de l'arsenic avec une composition adsorbante, la composition adsorbante comprenant un matériau de bismuth sur un support comprenant au moins l'un parmi un oxyde métallique, un oxyde de métalloïde ou un charbon actif, dans lequel le support présente une teneur en humidité d'environ 15 % en masse ou moins,
dans lequel la teneur en humidité est mesurable par un analyseur thermogravimétrique.

2. Le procédé de la revendication 1, dans lequel le matériau de bismuth est choisi dans un groupe constitué de bismuth élémentaire et d'un composé de bismuth.

3. Le procédé de la revendication 1, dans lequel le matériau de bismuth comprend un oxyde de bismuth, de préférence dans lequel l'oxyde de bismuth est dérivé d'un précurseur choisi dans un groupe constitué d'un composé organique de bismuth, d'un composé inorganique de bismuth, d'un sel organique de bismuth, d'un sel inorganique de bismuth, et de leurs combinaisons, ou de préférence dans lequel l'oxyde de bismuth est au moins partiellement dérivé d'un précurseur de citrate de bismuth, d'un précurseur de nitrate de bismuth, ou d'une combinaison de ceux-ci, ou de préférence dans lequel l'oxyde de bismuth est l'oxyde de bismuth (III) (Bi₂O₃).

4. Le procédé de la revendication 1, comprenant d'environ 5 % à environ 15 % en masse du matériau de bismuth, mesurable par spectrométrie à plasma à couplage inductif.

5. Le procédé de la revendication 1, dans lequel le support contient 5 wt% ou moins d'eau, mesurable par un analyseur thermogravimétrique.

6. Le procédé de la revendication 1, dans lequel le support comprend un oxyde métallique choisi dans un groupe constitué d'un oxyde de titane, d'un oxyde de cérium, d'un oxyde d'aluminium, d'un oxyde de silicium, d'un oxyde de zirconium, d'un oxyde de magnésium, de zéolites, de charbon actif, et de mélanges de ceux-ci, ou dans lequel l'oxyde métallique comprend du dioxyde de titane, de préférence dans lequel le dioxyde de titane est sous une forme anatase.

7. Le procédé de la revendication 1, dans lequel la composition adsorbante comprend une teneur en plomb d'environ 5 % en masse ou moins, mesurable par un spectromètre de fluorescence X, de préférence dans lequel la composition adsorbante est sans plomb.

8. Le procédé de la revendication 1, dans lequel le matériau arsenical est choisi dans un groupe constitué d'arsenic élémentaire et d'un composé contenant de l'arsenic.

9. Le procédé de la revendication 1, dans lequel le fluide contenant de l'arsenic fait partie d'un courant de procédé provenant d'un procédé choisi dans un groupe constitué d'un procédé pétrolier, d'un procédé pétrochimique, d'un procédé de polymérisation, d'un procédé de gaz de synthèse et d'un procédé de semi-conducteurs.
